# EUROPEAN PATENT APPLICATION

(11) **EP 1 710 671 A2**
(43) Date of publication of application: **11.10.2006**
(21) Application number: 06111141.5
(22) Date of filing: 14.03.2006
(51) Int. Cl.: G06F 3/033

(54) **Method and apparatus for automatic calibration of a touch monitor**

(30) Priority: 18.03.2005 US 84230
(71) Applicant: TYCO Electronics Corporation, Middletown, PA 17057-3163 (US)
(72) Inventor: Studt, Peter C, San Ramon, CA 94583 (US); North, Kenneth J, San Carlos, CA 94070 (US)
(74) Representative: Johnstone, Douglas Ian

(57) **Abstract**

A method and apparatus for associating components within a touch monitor (150) comprising a monitor (154) and a touchscreen (158) which are interconnected with one another. A first data value is stored in a memory (168) interconnected with the monitor (154), and a second data value is stored in a memory (180) which is interconnected with the touchscreen (158). The first and second data values are used to identify a unique relationship between the monitor (154) and the touchscreen (158). When the first and second data values are read and compared, it is determined whether the monitor (154) and the touchscreen (158) are associated with one another based on the first and second data values.

## Description

This invention relates generally to touch monitors, and more particularly, to automatic registration and calibration of a touch monitor with an application to facilitate installation and initialization with an application and within a system.

Touch monitors are provided for an increasing number of applications. Point of sale (POS), for processing transactions within a department store, and point of information (POI), such as an electronic directory are common. For example, applications include airport passenger and baggage check-in, and kiosks located within a store which provide information about products and services. The kiosks also may be used to place an order and/or complete a purchase without the assistance of a sales person. There are often many touch monitors installed within a single system.

A touch monitor has a monitor with a display for displaying data to a user. A touchscreen is installed in front of the display, and the user selects and/or inputs data by touching the touchscreen. In order for the user's touch on the touchscreen to successfully interact with the display, the coordinates of the display and the touchscreen are calibrated with respect to each other.

When installing touch monitors in a system, each of the touch monitors are calibrated one at a time. The calibration requires user interaction, is time consuming, and prone to confusion and error. For example, if the user does not touch the touchscreen in the correct position during the calibration routine, the touchscreen and display will not be calibrated correctly with respect to each other. As a result, a touch on the touchscreen will not correspond to and select the correct option on the display. Also, if an incorrect touchscreen is touched during the calibration process, the calibration routine will associate an incorrect monitor and touchscreen together.

In addition, users may order components for repair and assembly of touch monitors, potentially installing a touchscreen from one manufacturer on a monitor from a different manufacturer. When either the touchscreen or monitor is replaced, the calibration procedure is repeated, and the potential problems above may occur. Also, installing replacement components may be cumbersome and difficult for a user and may lead to problems such as the touchscreen being installed in a rotated position.

Therefore, a need exists for a touch monitor which addresses the problems noted above. Certain embodiments of the present invention are intended to meet these needs and other objectives that will become apparent from the description and drawings set forth below.

In an embodiment of the present invention, a method for associating components within a touch monitor comprises storing a first data value in a memory which is interconnected with a monitor. A second data value is stored in the memory which is interconnected with a touchscreen. The touchscreen and the monitor are interconnected with one another to form a touch monitor. The first and second data values identify a unique relationship between the monitor and the touchscreen.

In another embodiment of the present invention, a method for registering a touch monitor with an application comprises connecting the touch monitor to a system computer running an application. The touch monitor includes a touchscreen and a monitor. A first data value which uniquely identifies the touchscreen is read from a controller module. A second data value which uniquely identifies the monitor is read from the controller module. The first and second data values are compared, and it is determined whether the touchscreen and the monitor are associated with one another based on the first and second data values.

In another embodiment of the present invention, a touch sensitive apparatus for displaying data and accepting touch inputs comprises a monitor having a display for displaying information. A touchscreen senses touch events and is positioned proximate the display. A first memory is associated with the monitor and stores identification data. A second memory is associated with the touchscreen and stores the identification data. The identification data is used to establish an association between the monitor and the touchscreen.

The invention will now be described by way of example only with reference to the accompanying drawings in which:

FIG. 1 illustrates a touch monitor in accordance with an embodiment of the present invention.

FIG. 2 illustrates a block diagram of a touch monitor interconnected with a computer in accordance with an embodiment of the present invention.

FIG. 3 illustrates a block diagram of a touch monitor having multiple monitors and being interconnected with the computer in accordance with an embodiment of the present invention.

FIG. 4 illustrates a method for calibrating the touch monitor in accordance with an embodiment of the present invention.

FIG. 5 illustrates the touchscreen and display during the calibration process in accordance with an embodiment of the present invention.

FIG. 6 illustrates a screen displaying monitor settings on the display of the computer in accordance with an embodiment of the present invention.

FIG. 7 illustrates a touch monitor system comprising multiple touch monitors and a central computer in accordance with an embodiment of the present invention.

FIG. 8 illustrates a method for installing one or more touch monitors in the system in accordance with an embodiment of the present invention.

The foregoing summary, as well as the following detailed description of certain embodiments of the present invention, will be better understood when read in conjunction with the appended drawings. It should be understood that the present invention is not limited to the arrangements and instrumentality shown in the attached drawings.

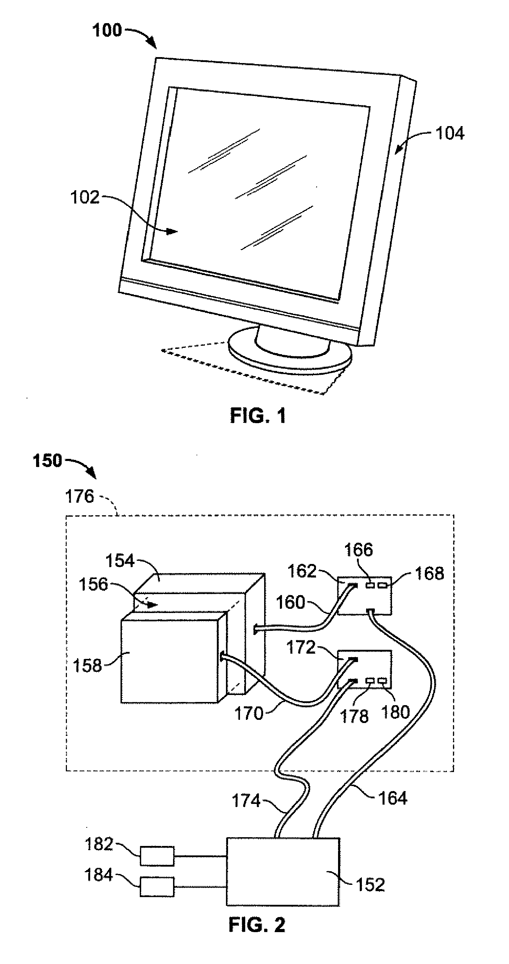

FIG. 1 illustrates a touch monitor 100 in accordance with an embodiment of the present invention. It should be understood that the touch monitor 100 may be other sizes and shapes. The touch monitor 100 may be installed on a desk, a wall, or within a kiosk, for example.

The touch monitor 100 comprises a touchscreen 102 and a monitor housing 104. The touchscreen 102 is installed over a display (not shown). The display and a monitor (not shown) may be within a monitor housing 104.

FIG. 2 illustrates a block diagram of a touch monitor 150 interconnected with a computer 152 in accordance with an embodiment of the present invention. The computer 152 runs one or more applications, such as in a factory, a retail store, a restaurant, a medical facility and the like. The computer 152 may be used for calibration and testing in a factory setting, for example, and may comprise a display 182 and a user input 184 such as a keyboard and/or a mouse.

A monitor 154 comprises components for displaying data on a display 156. The display 156 may be an LCD, CRT, plasma, photographic image and the like. A touchscreen 158 is installed proximate the display 156. The touchscreen 158 receives input from a user via a finger touch, a stylus, and the like. It should be understood that it is not necessary for the touchscreen 158 to be mounted over or in front of the display 156. By way of example only, if the display 156 is physically compliant, such as an LCD, the touchscreen 158 or other touch sensing element may be behind the display 156. The touchscreen 158 then senses a touch force transmitted through the display 156. Optionally, force sensors or touch pressure sensors (not shown) may be attached to the back of the display 156 to sense relative touch forces.

A monitor cable 160 connects the monitor 154 with a monitor controller 162. The monitor controller 162 receives video information from the computer 152 over video cable 164. The video information is received and processed by the monitor controller 162, then transferred to the monitor 154 over the monitor cable 160 for display on the display 156. It should be understood that the monitor 154 and the monitor controller 162 may be hardwired together or interconnected such that the monitor cable 160 is not required. The monitor controller 162 comprises components such as a CPU 166 and a memory 168.

A touchscreen cable 170 interconnects the touchscreen 158 with a touchscreen controller 172. The touchscreen controller 172 sends and receives information to and from the computer 152 over touch data cable 174. Touch information is received by the touchscreen 158, transferred over the touchscreen cable 170 to the touchscreen controller 172, and then sent over the touch data cable 174 to the computer 152. The touchscreen controller 172 comprises components such as a CPU 178 and memory 180.

A monitor housing 176 may enclose the monitor 154, the monitor and touchscreen cables 160 and 170, and the monitor and touchscreen controllers 162 and 172. The monitor housing 176 may enclose an outer edge portion of the touchscreen 158, securing the touchscreen 158 and/or covering fasteners which secure the touchscreen 158 to the monitor 154. By way of example only, the monitor housing 176 may be for a stand alone monitor. Optionally, the monitor housing 176 may be omitted if the touch monitor 150 is installed within a kiosk or other enclosure. The video and touch data cables 164 and 174 may be separate cables or packaged together. The video and touch data cables 164 and 174 extend from the monitor housing 176 to the location of the computer 152.

The memories 168 and 180 store data including Extended Display Identification Data (EDID) data. EDID data may include information about the monitor 154 and touchscreen 158 such as a vendor or manufacturer identification number, maximum image size, color characteristics, pre-set timings, and frequency range limits. Each manufacturer within the industry is assigned a unique identification number. In addition, one or more character strings may be stored to identify a serial number, name, date, and the like. Thus, the EDID data may store subsets of data providing identification of characteristics of one or more touch monitor components. Optionally, memories 168 and 180 may be combined and provided with one of monitor and touchscreen controllers 162 and 172, to form a single common memory module which stores the EDID for both of the monitor 154 and touchscreen 158. Optionally, the touchscreen and monitor controllers 172 and 162 may be combined to form a single common controller for the touch monitor 150.

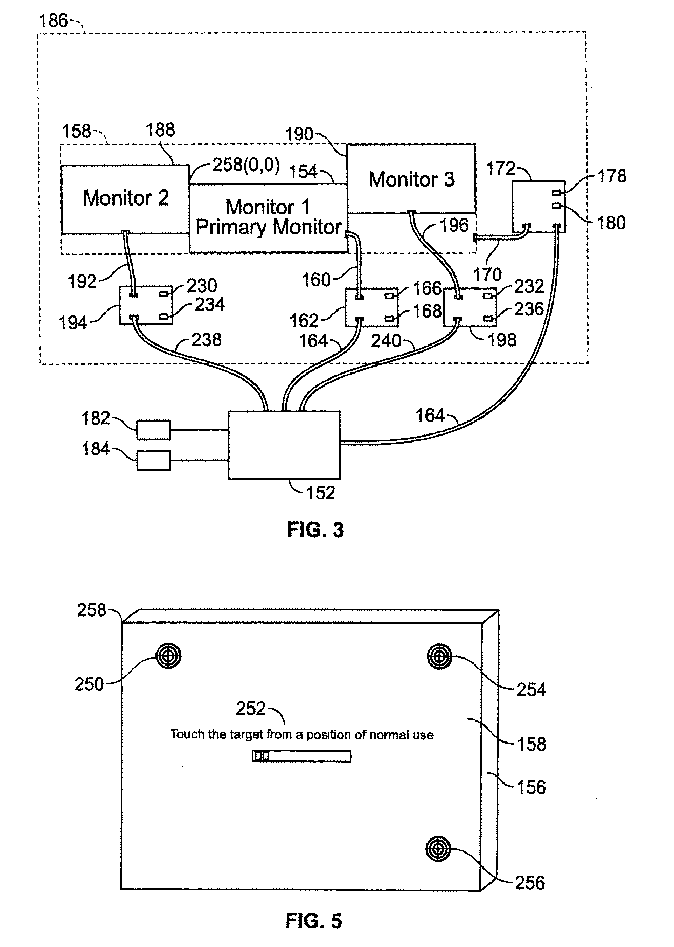

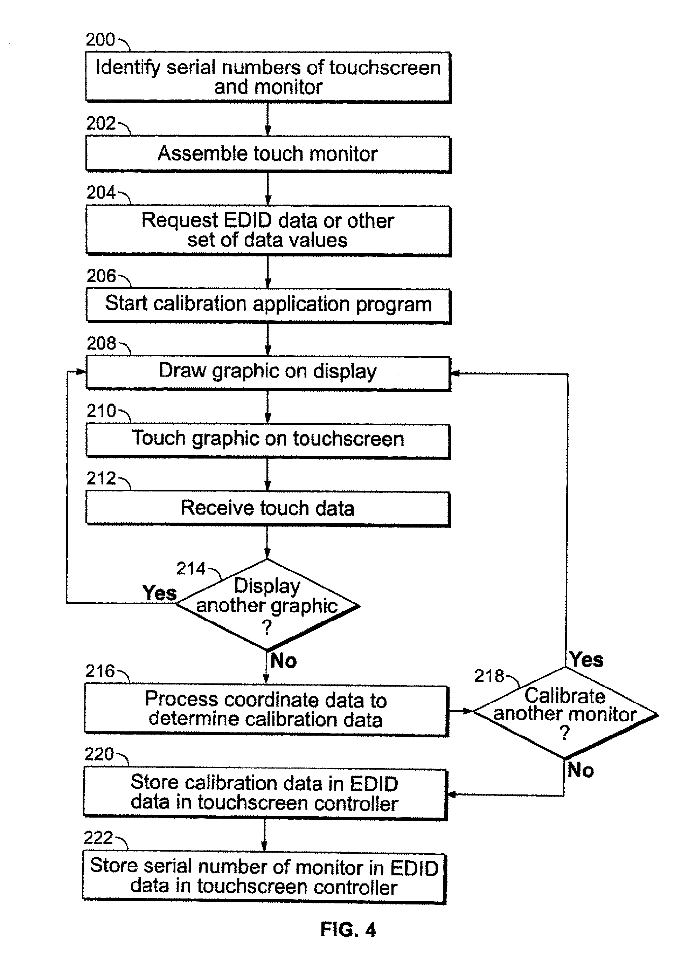

FIG. 3 illustrates a block diagram of a touch monitor 186 having multiple monitors 154, 188 and 190 and being interconnected with the computer 152 in accordance with an embodiment of the present invention. The touchscreen 158 covers the displays of the monitors 154, 188 and 190. The monitor 154 is interconnected with the monitor controller 162 as previously discussed. A monitor cable 192 connects the monitor 188 with a monitor controller 194, and a monitor cable 196 connects the monitor 190 with a monitor controller 198. The monitor controllers 194 and 198 comprise components such as a CPU 230 and 232 and a memory 234 and 236 as previously discussed. The monitor controllers 194 and 198 receive video information and communicate with the computer 152 over video cables 238 and 240. It should be understood that the physical location or geometry of each of the monitors 154, 188 and 190 is fixed with respect to the touchscreen 158 prior to calibrating the touch monitor 186. If the geometry is changed after the touch monitor 186 is calibrated (such as by the method of FIG. 4), the touch coordinates and display coordinates may not match. Therefore, any change in the geometrical relationship may require calibration of the touch monitor 186.

FIG. 4 illustrates a method for calibrating the touch monitors 150 and 186 in accordance with an embodiment of the present invention. The method of FIG. 4 may be accomplished prior to installing the touch monitor 150 or 186 with an end application or in a customer's system. For simplicity, the calibration method will be discussed primarily with respect to the touch monitor 150 of FIG. 2, but it should be understood that the steps also apply to the touch monitor 186 of FIG. 3.

In step 200, the serial number of the touchscreen 158 and the serial number of the monitor 154 are identified. In step 202, the touch monitor 150 is assembled. The monitor 154 and the touchscreen 158 are installed together, with the touchscreen 158 proximate the display 156 as discussed previously. Alternatively, a single touchscreen, such as the touchscreen 158, may be installed over multiple monitors 154,188 and 190 as illustrated in FIG. 3. The monitor and touchscreen controllers 162 and 172 are interconnected with the monitor 154 and touchscreen 158 with the monitor and touchscreen cables 160 and 170. The video cable 164 and touch data cable 174 are interconnected with the monitor and touchscreen controllers 162 and 172 and/or the monitor housing 176. The opposite ends of the video and touch data cables 164 and 174 are interconnected with the computer 152.

In step 204, the computer 152 requests the monitor controller 162 to send a copy of a set of data values stored in the memory 168. For the touch monitor 186 of FIG. 3, the computer 152 requests and receives the set of data values stored in the memories 168, 234 and 236 of the monitor controllers 162, 194 and 198, respectively. The computer 152 also requests the touchscreen controller 172 to send a copy of a set of data values stored in the memory 180. The sets of data values may include the EDID data as previously discussed. Manufacturers often assign a unique serial number to each unit within a product line. Therefore, a manufacturer may assign each monitor 154 and each touchscreen 158 a unique serial number or other identification number, which may be stored in the EDID data. The computer 152 now has identification information for both the monitor 154 and the touchscreen 158 which may include a serial number and a manufacturer identification number.

In step 206, the computer 152 starts a calibration application program. In step 208, the calibration application program communicates to the monitor controller 162 via the video cable 164 to draw a graphic, such as a target or cross hairs, on the display 156.

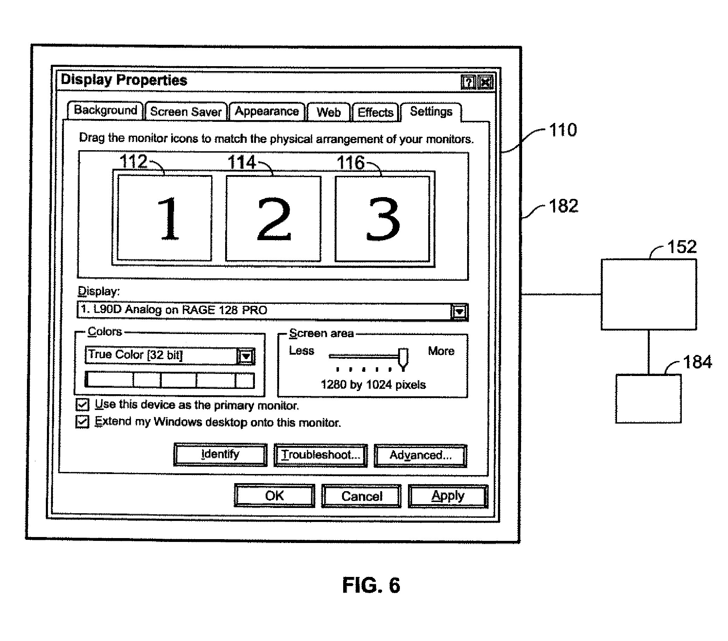

FIG. 5 illustrates the touchscreen 158 and display 156 during the calibration process in accordance with an embodiment of the present invention. The touchscreen 158 is transparent or semi-transparent; therefore, any data displayed on the display 156 is visible through the touchscreen 158. The calibration application program has drawn graphic 250 in the upper left corner of the display 156. In addition, a message 252 may be displayed for the user, indicating the action needed. In this example, the user is to touch the graphic 250, or target, from a position of normal use.

Returning to FIG. 4, in step 210, the user touches the graphic 250. In step 212, the computer 152 receives touch data from the touchscreen 158 via the touch data cable 174. Optionally, the computer 152 may receive relative force data from force sensors or touch pressure sensors (not shown) installed on the back of the display 156 as discussed previously. The computer 152 knows the location of the set of coordinates (first graphic coordinates) corresponding to the graphic 250 which was drawn on the display 156, and has received a set of coordinates (first touch coordinates) indicating a location where a touch was sensed on the touchscreen 158. The coordinates may be determined with respect to an origin 258. The origin 258 may be located anywhere on the display 156. By way of example only, the origin 258 (0, 0) may be located in the upper left corner of the display 156. The lower right corner of the display 156 may have coordinates (1000, 1000), wherein the Y axis in the positive direction is downward as is known in the art. For simplicity, the origin 258 also indicates the origin of the touchscreen 158, and thus is located in the upper left corner of the touchscreen 158 at (0, 0). The lower right corner of the touchscreen 158 may be (4000, 4000). Therefore, the first graphic coordinates may be (125, 125) and the first touch coordinates may be (500, 500).

FIG. 6 illustrates a screen 110 displaying monitor settings on the display 182 of the computer 152 in accordance with an embodiment of the present invention. The screen 110 may be used to arrange the monitors 154, 188 and 190 of FIG. 3, which correspond to icons 112, 114 and 116. A user may drag the icon 114 with the user input 184 to be on the left side of icon 112 to reflect the physical arrangement of the monitors 154, 188 and 190. The icons 112, 114 and 116 are each arranged to touch another icon 112, 114 and 116 on at least a part of one edge to form a contiguous region as illustrated in FIG. 3.

In this example, the monitor 154 has been designated as the primary monitor. As in FIG. 5, the origin 258 (0, 0) may be located in the upper left corner of the display 156 of the monitor 154, while the lower right corner of the display 156 may have coordinates (1000, 1000). The coordinates of the monitors 188 and 190 are computed with reference to the origin 258.

In step 214, the calibration application program determines if another graphic is to be displayed on the display 156. If yes, the method returns to step 208. In step 208, a second graphic 254 is displayed on the display 156 in a location different with respect to the location of the previous graphic 250. For example, the second graphic 254 may be displayed on the upper right side of the display 156.

In step 210, the user touches the second graphic 254 and in step 212 the computer 152 receives the touch data via the touch data cable 174. In step 214, the calibration application program determines if another graphic (third graphic 256) should be displayed. Often, three graphics will be drawn on the display 156, each at a different location. It should be understood that additional graphics, such as three additional graphics for each of the displays associated with the monitors 154, 188 and 190 may be displayed and corresponding touch data received during the calibration process.

Once the graphics 250, 254 and 256 have been displayed and the associated touch data received by the computer 152, in step 216 the computer 152 processes the coordinate data to determine calibration data relating the coordinate sets spatially. For example, the computer 152 has received three sets of (x, y) coordinates from the touchscreen 158, each set of which is associated with a set of (x, y) coordinates from one of the three displayed graphics. Because the computer 152 drew the graphics 250, 254 and 256, the computer 152 knows the corresponding graphic coordinates for the display 156. Therefore, the computer 152 determines calibration data that describes a spatial relationship between the received touch coordinates and the graphic coordinates so that the locations where the user touches the touchscreen 158 and the location where the graphics 250, 254 and 256 are displayed on the display 156 correspond with each other. The calibration takes into account both the (x, y) adjustment of the coordinates of the touch data and any possible rotation of the touchscreen 158 with respect to the display 156. If touchscreen technologies producing a non-linear response are used, a linearization process is performed on the raw touch data prior to calibrating the coordinates and possible rotation.

Continuing the example above, the first graphic coordinates may be (125,125), the second graphic coordinates may be (875, 125) and the third graphic coordinates may be (875, 875). The first touch coordinates may be (500, 500), the second touch coordinates may be (3500, 500), and the third touch coordinates may be (3500, 3500). The calibration application program may then determine that the display 156 is 1000x1000 units while the touchscreen 158 is 4000x4000 units. Therefore, the touch coordinates may be divided by 4 to be adjusted to, or to correspond with, the graphic coordinates.

The following example takes into account a 90 degree clockwise rotation of the touchscreen 158 with respect to the monitor 154. The graphic coordinates remain the same as above, wherein the first graphic coordinates are (125, 125), the second graphic coordinates are (875, 125) and the third graphic coordinates are (875, 875). The first touch coordinates are (500, 3500), corresponding with the bottom left corner of the touchscreen 158. The second touch coordinates are (500, 500), and the third touch coordinates are (3500, 500). In this example, the touch coordinates are divided by 4 and translated by negative 90 degrees to correspond with the graphic coordinates.

In step 218, the computer 152 determines whether another monitor is to be calibrated. For example, for the touch monitor 186, the calibration application program calibrates each of the monitors 154, 188 and 190. If another monitor, such as monitor 188 and 190, is to be calibrated, flow returns to step 208. If all monitors have been calibrated, flow passes to step 220.

In step 220, the computer 152 stores the calibration data in the EDID data of the touchscreen controller 172, such as in memory 180. The calibration data may also be defined as a relationship data value. It should be understood that the calibration data may be stored in the monitor controller 162 in place of, or in addition to, the touchscreen controller 172. Returning to FIG. 3, if touch coordinates are computed for each of the monitors 154, 188 and 190, corresponding calibration data and/or relationship data values for each of the monitors 154, 188 and 190 are stored in the touchscreen controller 172 and/or monitor controllers 162, 194 and 198.

In step 222, the computer 152 stores the serial number of the monitor 154 in the EDID data of the touchscreen controller 172. If more than one monitor is installed within a touch monitor, such as the touch monitor 186, the serial numbers of each monitor 154, 188 and 190 are stored in the EDID data of the touchscreen controller 172. This step associates the touchscreen 158 and the monitor 154 (or monitors 154, 188 and 190) to one another. Therefore, when the EDID data of the touchscreen controller 172 is read by a customer's system, the system will know that the monitor 154 (or monitors 154, 188 and 190) is associated with the touchscreen 158 and will have the correct calibration for the touch monitors 150 and 186. Thus, when a customer installs the touch monitor 150 and 186, there is no need for the customer to associate the components or perform a calibration procedure.

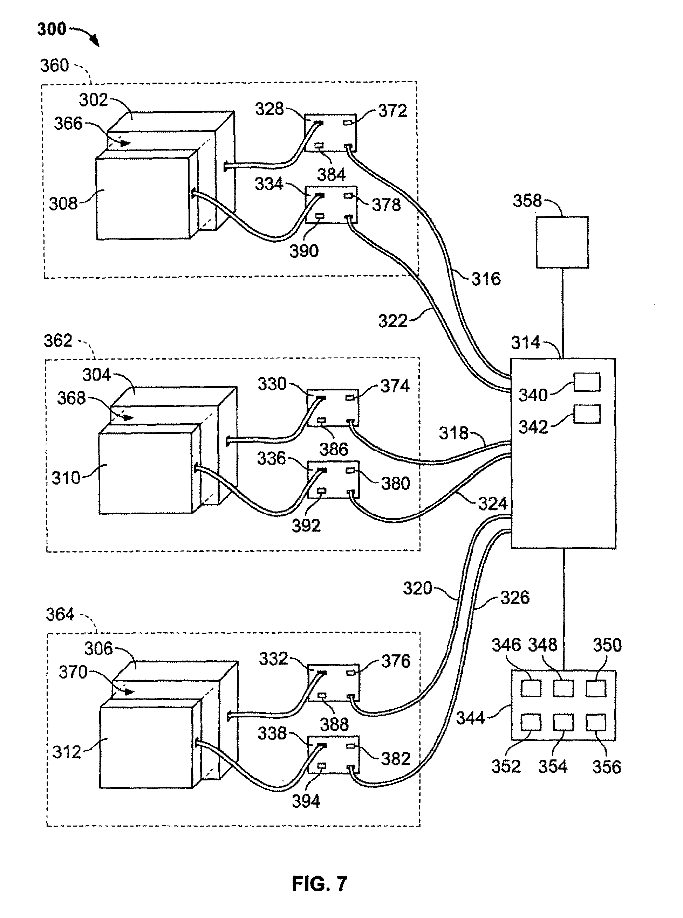

FIG. 7 illustrates a touch monitor system 300 comprising multiple touch monitors 360, 362 and 364 and a central computer 314 in accordance with an embodiment of the present invention. Touch monitors 360-364 are illustrated, although it should be understood that the system 300 may comprise more or less touch monitors. The system 300 may be installed at a customer location, such as a department store, wherein each of the touch monitors 360-364 may be a point of sale terminal and the central computer 314 may be located within a private area of the department store, not accessible to customers.

The touch monitors 360-364 each comprise a monitor 302, 304 and 306 and a touchscreen 308, 310 and 312, respectively. Each of the monitors 302-306 comprise a display 366, 368 and 370, as previously discussed in FIG. 2. Each of the touch monitors 360-364 also comprises a monitor controller 328, 330 and 332 having a memory 372, 374 and 376 and a CPU 384, 386 and 388, and a touchscreen controller 334, 336 and 338 having a memory 378, 380 and 382 and a CPU 390, 392 and 394. The touch monitors 360-364 each communicate with the computer 314 via a video cable 316, 318, and 320 and a touch data cable 322, 324 and 326, respectively. Although individual cables 316-326 are illustrated for clarity, other cabling solutions and networks may be used. Additionally, a touch monitor such as the touch monitor 186 having multiple monitors 154, 188 and 190 receiving touch data from a single touchscreen 158 may be installed in the system 300.

The computer 314 comprises a display 344 for displaying data, a memory 340 for storing data information, and a user interface 358, such as a keyboard and/or a mouse. Alternatively, the display 344 may be a touchscreen which accepts touch data input from a user.

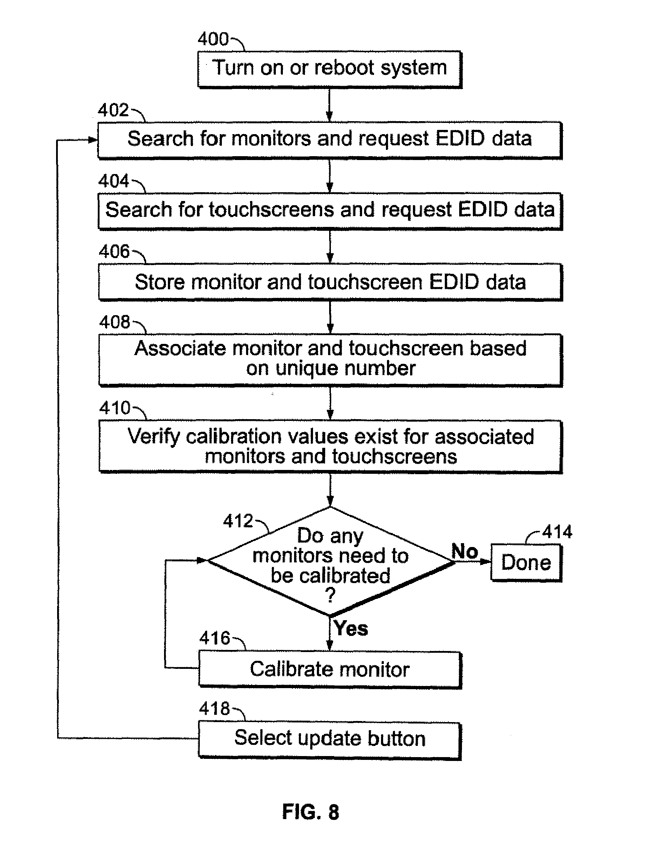

FIG. 8 illustrates a method for installing one or more touch monitors 360-364 in the system 300 in accordance with an embodiment of the present invention. The system 300 may be newly installed, or one of the touch monitors 360-364 may be installed to add a new touch monitor or replace a previously installed touch monitor.

In step 400, the system 300 may be either turned on or rebooted. In step 402, the computer 314 searches for and identifies the monitors 302-306 interconnected with the computer 314. The computer 314 may individually poll each of the monitors 302-306 and request the monitor controllers 328-332 to send any stored identification data values, such as the EDID data, stored within the memories 372-376. The computer 314 registers the manufacturer, serial number, and other information such as resolution of each of the monitors 302-306. The computer 314 may then display a box or other representation on the display 344 indicating each of the monitors 302-306. For example, boxes 346-356 are displayed on the display 344 indicating that six monitors are interconnected with the computer 314. The boxes 346, 348 and 350 may indicate monitors 302-306, respectively, while boxes 352, 354 and 356 indicate three additional monitors not shown in FIG. 7. The user may move the boxes 346-356 around on the display 344 to indicate a physical relationship between the monitors installed in the system 300.

In step 404, the computer 314 searches for and identifies the touchscreens 308-312 interconnected with the computer 314. For example, the computer 314 may load a touchscreen driver program which initiates the searching and identification process. As in step 402, the computer 314 may individually poll each of the touchscreens 308-312 and request the touchscreen controllers 334-338 to send any stored identification data values, such as the EDID data stored within the memories 378-382,

In step 406, the computer 314 stores the EDID data and/or identification data values from each of the monitor controllers 328-332 and the touchscreen controllers 334-338 in the memory 340. In step 408, the computer 314 identifies whether any of the monitors 302-306 is associated with any of the touchscreens 308-312. The computer 314 compares the serial number stored in the EDID data from each of the monitors 302-306 to the monitor serial number stored in the EDID data from each of the touchscreens 308-312. The computer 314 associates a monitor 302-306 with a touchscreen 308-312 when it determines that the same monitor serial number is stored in both. It should be understood that although the monitor serial number is used in the aforementioned example, a different unique identification number or string of characters may be used, such as the touchscreen serial number, a randomly generated number, and the like. However, it is important that an identification number or serial number be used only once within the system 300 to avoid conflict when identifying associations between components.

In step 410, the computer 314 determines, for each of the touchscreens 308-312 associated with a monitor 302-306, whether calibration data is also stored within the EDID data. The calibration information for the monitors 302-306 and associated touchscreens 308-312 is stored in the memory 340 of the computer 314. There is no need for the user to calibrate a touch monitor 360-364 that already has calibration values determined.

In step 412, the computer 314 determines whether any monitor 302-306 needs to be calibrated. For example, if one or more monitors 302-306, such as monitor 306, are not associated with a touchscreen 308-312 in step 408, the monitor 306 would need to be calibrated. Also, if the computer 314 found that a touchscreen 308-312, such as touchscreen 312, has the serial number of the monitor 306 stored in the EDID data, but does not have calibration data stored in the EDID data, the monitor 306 would need to be calibrated. If all of the monitors 302-306 have been calibrated, flow passes to step 414 and the method is complete. If any monitor 302-306, such as monitor 306, needs to be calibrated, flow passes to step 416 to calibrate the monitor 306. A calibration method such as the method of FIG. 4 may be used. Until the calibration is complete, the computer 314 will ignore any touch data coming from touchscreens other than the touchscreen/monitor being calibrated.

After an identified monitor, such as monitor 306, has been calibrated, flow returns to step 412 to determine whether any other monitor 302-306 within the system 300 needs to be calibrated. Steps 412 and 416 are repeated until all monitors 302-306 are calibrated.

Alternatively, in step 418 the user may select an update button 342. The update button 342 may be a physical button, such as a key on a keyboard, or a software selection displayed on the display 344. Therefore, the system 300 can recognize newly installed or replaced monitors 302-306 without having to shut down and/or reboot the system 300. For example, if a new monitor 302-306 is installed, the update button 342 may be pressed. Flow passes to step 402 and the computer 314 starts the method of identifying the monitors 302-306 and touchscreens 308-312 interconnected with the computer 314.

Previously, when monitors, touchscreens, and/or touch monitors were installed in a customer's system, the customer's system did not know which components should be associated together. By installing a touchscreen and monitor(s) together as a touch monitor and calibrating the components with respect to each other prior to installation within a user's system, the touch monitor is easily, quickly, and successfully integrated into the user's system. Storing the monitor serial number or other identification number along with calibration data in the touchscreen controller allows the user's system to automatically identify associated components and their calibration information without user interaction, which is time consuming and prone to error.

While the invention has been described in terms of various specific embodiments, those skilled in the art will recognize that the invention can be practiced with modification within the scope of the claims.

## Claims

1. A method for associating components (154, 158) within a touch monitor (150), comprising:
storing (406) a first data value in a memory (168, 180), said memory (168) being interconnected (160) with a monitor (154); and
storing (406) a second data value in said memory (168, 180), said memory (180) being interconnected (170) with a touchscreen (158), said touchscreen (158) and said monitor (154) being interconnected with one another to form the touch monitor (150), said first and second data values identifying a unique relationship between said monitor (154) and said touchscreen (158).

2. The method of claim 1, wherein said first and second data values represent one of (a) a monitor (154) identification number, (b) a touchscreen (158) identification number, and (c) calibration values for establishing a calibration relationship between graphic coordinates associated with said monitor (154) and touch coordinates associated with said touchscreen (158).

3. The method of claim 1 or 2, further comprising:
establishing (216) a spatial relationship between a first set of coordinates on said monitor (154) and a second set of coordinates on said touchscreen (158); and
storing (220) said spatial relationship in said memory.

4. The method of claim 1, 2 or 3 wherein said memory (168, 180) includes physically separate first (168) and second (180) memories that are separately interconnected (160, 170) to said monitor (154) and said touchscreen (158), respectively, said first (168) and second (180) memories storing said first and second data values, respectively.

5. The method of any preceding claim, further comprising:
selecting (418) an updating process on a computer (152), said computer (152) being interconnected (160, 164, 170, 174) with said monitor (154) and said touchscreen (158);
reading (402, 404, 406) and comparing said first and second data values with said updating process; and
associating (408) said monitor (154) and touchscreen (158) with one another if said first and second data values are equivalent.

6. A method for automatically registering a touch monitor (150) with an application, comprising:
connecting said touch monitor (150) to a system computer (152) running an application, said touch monitor (150) including a touchscreen and a monitor (154);
reading a first data value from a controller module (162, 172), said first data value uniquely identifying said touchscreen (158);
reading a second data value from said controller module (162, 172), said second data value uniquely identifying said monitor (154);
comparing (408) said first and second data values; and
determining whether said touchscreen (158) and said monitor (154) are associated with one another based on said first and second data values.

7. The method of claim 6, wherein said first and second data values represent identification data based on said monitor (154), and said touchscreen (158).

8. The method of claim 7 wherein said first and second data values are one of a monitor and a touchscreen serial number.

9. The method of claim 6, 7 or 8, wherein said first and second data values are stored in extended display identification data (EDID) in separate first (162) and second (172) controllers, respectively, representing said controller module.

10. The method of claim 6, further comprising storing (220) calibration data in EDID data in a first controller (162) within said controller module, said calibration data defining a spatial relationship between said touchscreen (158) and said monitor (154).

11. The method of claim 9, further comprising reading a third data value from one of first (162) and second (172) controllers within said controller module, said third data value defining a calibration relationship between said monitor (154) and said touchscreen (158).

12. A touch sensitive apparatus (150) for displaying data and accepting touch inputs, comprising:
a monitor (154) having a display (156) for displaying information;
a touchscreen (158) for sensing touch events, said touchscreen (158) being positioned proximate said display (156);
a first memory (168) associated with said monitor (154), said first memory (168) storing identification data; and
a second memory (180) associated with said touchscreen (158), said second memory (180) storing said identification data, said identification data being used to establish an association between said monitor (154) and said touchscreen (158).

13. The apparatus (150) of claim 12, wherein one of said first and second memories further store calibration data defining a spatial relationship between said touchscreen and said display.

14. The apparatus of claim 12, wherein said first (168) and second (180) memories store EDID data, said identification data being stored as a subset of said EDID data.

15. The apparatus (186) of claim 12, further comprising a second monitor (188) having a second display for displaying data, said touchscreen (158) being mounted proximate said second display, said second monitor (188) having a second identification data, said second memory (180) storing said second identification data, said second identification data being used to establish an association between said second monitor (188) and said touchscreen (158), said second identification data being different with respect to said identification data.
